Europäisches Patentamt

European Patent Office

Office européen des brevets

(19)

(11) Veröffentlichungsnummer : **0 030 697**
**B1**

(12) **EUROPÄISCHE PATENTSCHRIFT**

(45) Veröffentlichungstag der Patentschrift :
20.04.83

(21) Anmeldenummer : 80107718.1

(22) Anmeldetag : 08.12.80

(51) Int. Cl.³ : **B 01 J 47/10**, B 01 J 47/02, B 01 J 49/00

(54) **Gegenstrom-Verfahren zur Behandlung von Flüssigkeiten mit einem Ionenaustauscher und Ionenaustauschfilter zur Durchführung des Verfahrens.**

(30) Priorität : 18.12.79 DE 2950875

(43) Veröffentlichungstag der Anmeldung :
24.06.81 Patentblatt 81/25

(45) Bekanntmachung des Hinweises auf die Patenterteilung : 20.04.83 Patentblatt 83/16

(84) Benannte Vertragsstaaten :
AT BE CH DE FR GB IT LI NL SE

(56) Entgegenhaltungen :
DE A 1 442 689
GB A 1 367 085

(73) Patentinhaber : BAYER AG
Zentralbereich Patente, Marken und Lizenzen
D-5090 Leverkusen 1, Bayerwerk (DE)

(72) Erfinder : Siegers, Günter
Altenberger Dom-Strasse 194
D-5060 Bergisch-Gladbach 2 (DE)

EP 0 030 697 B1

# 0 030 697

Gegenstrom-Verfahren zur Behandlung von Flüssigkeiten mit einem Ionenaustauscher und Ionenaustauschfilter zur Durchführung des Verfahrens

Es sind bereits Gegenstrom-Verfahren zur Behandlung von Flüssigkeiten mit Adsorptionsmitteln bekannt, bei denen die zu behandelnde Flüssigkeit im Aufwärtsstrom durch das Adsorptionsmittel geleitet wird, wobei durch Einstellen der Strömungsgeschwindigkeit im Filter dafür Sorge getragen wird, daß der untere Teil der Adsorptionsmittel-Masse als Wirbelbett und der obere Teil als Festbett vorliegt, das Regenerieren der beladenen Adsorptionsmittel im Abwärtsstrom und das Rückspülen der Adsorptionsmittelmasse im Aufwärtsstrom vorgenommen wird. Ein solches Verfahren ist z. B. in der DE-C 14 42 689 beschrieben. Dieses leistungsfähige und wirtschaftliche Verfahren bietet aber Schwierigkeiten in der Anfahrphase nach dem Regenerieren und Auswaschen bzw. nach Betriebsunterbrechungen. In dieser Phase besteht die Gefahr von Umschichtungen in der zuletzt von der aufzubereitenden Flüssigkeit durchströmten Oberschicht (Feinreinigungsschicht). Infolge der Umschichtungen wird die Qualität der behandelten Flüssigkeit herabgesetzt und die Kapazität der Ionenaustauscher nicht voll ausgenutzt.

Um diese Umschichtungen in der Anfahrphase zu vermeiden, hat man sich bislang damit geholfen, den Freiraum zwischen Ionenaustauscherfüllung und dem den Ionenaustauscherraum nach oben abschließenden Düsenboden möglichst klein zu halten. Infolge der Volumenveränderungen, die die Ionenaustauscher beim Beladen und Regenerieren erfahren, bleibt dieser Freiraum aber nicht konstant, sondern verändert sich fortlaufend während der einzelnen Arbeitsphasen. So schrumpfen die stark dissoziierten Ionenaustauscher beim Beladen so stark, daß gegen Ende des Filterlaufs ein Freiraum, der zunächst nur etwa 10 Vol.-%, bezogen auf das Ionenaustauschervolumen, beträgt, auf etwa 20 Vol.-% angewachsen ist. Schon nach 50 % der Laufzeit beträgt der Freiraum etwa 15 % und Umschichtungen während Betriebsunterbrechungen lassen sich nur vermeiden, wenn man das Absinken des Ionenaustauschers auf den unteren Düsenboden durch Einleiten von bereits aufbereiteter Flüssigkeit in der Betriebsrichtung entgegengesetzten Richtung beschleunigt. In der Praxis hilft man sich bei Betriebsunterbrechungen diskontinuierlich arbeitender Ionenaustauscher-Anlagen durch Umschaltung des Filters auf Zirkulationsbetrieb, d. h. nachdem Abstellen wird mit Hilfe einer Pumpe die innerhalb einer Anlage befindliche Flüssigkeit mit ausreichender Geschwindigkeit zirkuliert und der Ionenaustauscher auf diese Weise an dem oberen Düsenboden, wie während des Betriebes, fixiert. Die Durchführung dieses Zirkulationsbetriebes erfordert neben einer Pumpe und elektrischer Antriebsenergie die Installation zusätzlicher Rohrleitungen und Ventile.

Außerdem steht das Erfordernis eines möglichst kleinen Freiraums der Forderung nach einem ausreichenden Rückspülraum entgegen. Man hat deshalb, da infolge des zu kleinen Freiraums ein Rückspülen im Filter nicht möglich war, das Rückspülen in einem gesonderten Spülbehälter vorgenommen.

In der GB-A-1 367 085 ist ein Gegenstrom-Filter und Verfahren beschrieben, bei dem unter der Filterkammer ein Rückspülraum angeordnet ist. Filterkammer und Rückspülraum sind durch einen flüssigkeitsdurchlässigen Boden voneinander getrennt, der mit den Transport des Ionenaustauschers in der Richtung Rückspülraum-Filterkammer gestattenden Einwegventilen versehen ist. Zur Verwendung im Filter sind Ionenaustausch-Harze vorgesehen, deren Volumen beim Regenerieren abnimmt. Zum Rückspülen wird ein Teil des Harzes aus der Filterkammer über eine By-pass-Leitung in den Rückspülraum überführt und nach Abschluß des Spülvorganges durch die Einwegventile wieder zurück in die Filterkammer befördert.

Es wurde nun gefunden, daß man die vorstehend erläuterten Schwierigkeiten, Vermeidung von Umschichtungen in der Feinreinigungsschicht und Schaffung eines ausreichenden Rückspülraumes innerhalb des Filters, dadurch beseitigen kann, daß man den Filterraum in mindestens 2, durch flüssigkeitsdurchlässige Böden getrennte Kammern unterteilt, diese aneinandergrenzenden Kammern durch den Transport von Adsorptionsmitteln gestattende Vorrichtungen miteinander verbindet und vor und/oder während der einzelnen Arbeitsphasen bestimmte Füllstände in den einzelnen Kammern einstellt durch Überführen von Adsorptionsmittel von einer Kammer in die andere Kammer über die den Transport von Adsorptionsmittel gestattenden Vorrichtungen.

Die Erfindung betrifft daher ein Gegenstrom-Verfahren zur Behandlung von Flüssigkeiten mit einem Ionenaustauscher durch Beladen des Ionenaustauschers im Aufwärtsstrom, wobei der untere Teil der Ionenaustauschermasse als Wirbelbett und der obere Teil als Festbett vorliegt, Regenerieren des beladenen Ionenaustauschers im Abwärtsstrom und Rückspülen im Aufwärtsstrom, das dadurch gekennzeichnet ist, daß man einen Ionenaustauscher, dessen Volumen beim Beladen ab- und beim Regenerieren zunimmt, innerhalb des Ionenaustauschfilters auf 2 oder 3 übereinander angeordnete, durch flüssigkeitsdurchlässige Böden getrennte Kammern verteilt, von denen aneinander grenzende Kammern durch den Transport des Ionenaustauschers gestattende, mit einem Absperrorgan versehene Rohrleitungen miteinander verbunden sind, und den Ionenaustauscher während der einzelnen Arbeitsphasen in einer solchen Menge von einer Kammer in die andere Kammer bzw. die anderen Kammern überführt, daß während des Beladens die von der zu behandelnden Flüssigkeit zuletzt durchströmte Kammer zu 80 bis 98 Vol.-%, bezogen auf das Kammervolumen, mit in Festbett vorliegendem Ionenaustauscher gefüllt ist, daß beim Regenieren diese zuletzt durchströmte Kammer gleichmäßig zu 80 bis 100 Vol.-%, bezogen auf das Kammervolumen, mit Ionenaustauscher gefüllt ist und daß beim

2

Rückspülen der Rückspülraum in der rückzuspülenden Kammer 30 bis 100 Vol.-%, bezogen auf das Volumen des in der rückzuspülenden Kammer befindlichen Ionenaustauscher beträgt und daß man zum Transport der Ionenaustauscher von einer Kammer in die andere beim Beladen die zu behandelnde Flüssigkeit, beim Regenerieren das Regeneriermittel und zum Rückspülen die Rückspülflüssigkeit verwendet.

Bei dem erfindungsgemäßen Verfahren wird beim Regenerieren von dem beim Regenerieren quellenden Ionenaustauscher aus der zuletzt durchströmten Kammer ein der Volumenzunahme des Ionenaustauschers entsprechendes Volumen an Adsorptionsmittel in die vor dieser Kammer angeordnete Kammer überführt.

Beim Rückspülen wird vorzugsweise soviel Ionenaustauscher aus der rückzuspülenden Kammer in die benachbarte Kammer überführt, daß der Rückspülraum in der rückzuspülenden Kammer 40 bis 50 Vol.-%, bezogen auf das Volumen des in der rückzuspülenden Kammer befindlichen Adsorptionsmittels beträgt.

Die Erfindung betrifft ferner ein Ionenaustauschfilter zur Durchführung des vorstehend beschriebenen Verfahrens. Das Filter ist dadurch gekennzeichnet,

a) daß es aus 2 oder 3 übereinander angeordneten, durch flüssigkeitsdurchlässige Böden getrennten Kammern besteht;

b) daß die aneinandergrenzenden Kammern durch die flüssigkeitsdurchlässigen Böden überbrückende, den Transport des Ionenaustauschers gestattende und mit einem Absperrorgan versehene Rohrleitungen miteinander verbunden sind;

c) daß die die flüssigkeitsdurchlässigen Böden überbrückenden Rohrleitungen im oberen Viertel der unteren und im unteren Viertel der oberen Kammer angebracht sind;

d) daß bei dem Zweikammerfilter das Verhältnis der Volumina der zwei Kammern 0,5-1,5 : 1 und bei dem Dreikammerfilter das Verhältnis der Volumina der drei Kammern 0,5 bis 1,5 : 0,5 bis 1,5 : 1 beträgt;

e) daß das Volumen des Ionenaustauschers im Ionenaustauschfilter 55-85 % des Filtervolumens beträgt.

Die Ionenaustauschermenge zur Füllung des Ionenaustausch-Filters wird vorzugsweise so bemessen, daß das Volumen des Ionenaustauschers 60 bis 80 Vol.-% des Ionenaustauschfiltervolumens beträgt.

Ionenaustauscher, deren Volumen beim Beladen ab- und beim Regenerieren zunimmt, sind z. B. stark saure Kationen- oder stark basische Anionenaustauscher. Zur Füllung der erfindungsgemäßen Filter werden Ionenaustauscher eines einheitlichen Typs, d. h. Ionenaustauscher einer einheitlichen Säure- bzw. Basenstärke verwendet.

Unter flüssigkeitsdurchlässigen Böden sind im Rahmen der erfindungsgemäßen Filter in der Ionenaustauscher-Filtertechnik bekannte, mit Öffnungen (Düsen) versehene Platten zu verstehen, die wohl für die Flüssigkeit, nicht jedoch für den Ionenaustauscher durchlässig sind.

Zur Erzielung eines gleichmäßigen Transportes des Ionenaustauschers durch die die flüssigkeitsdurchlässigen Böden überbrückenden Rohrleitungen hat es sich als vorteilhaft erwiesen, wenn der freie Querschnitt der Öffnungen der flüssigkeitsdurchlässigen Böden 50 bis 300 $cm^2/m^2$, vorzugsweise 100 bis 200 $cm^2/m^2$ Bodenfläche beträgt.

Das erfindungsgemäße Verfahren kann z. B. in folgender Weise ausgeführt werden:

In der Beladungsphase wird die zu der zuletzt von der aufzubereitenden Flüssigkeit durchströmten Kammer führende Rohrleitung geöffnet. Durch die Leitung wird entsprechend der Schrumpfung des Ionenaustauschers aus der darunter befindlichen Kammer ständig Ionenaustauscher nachgeliefert und auf diese Weise eine optimale Packungsdichte erreicht. Der Filterlauf kann jederzeit unterbrochen werden, ohne daß es zu Umschichtungen mit den beschriebenen Nachteilen kommen kann. Umgekehrt wird in der Regenerationsphase mit dem von oben nach unten fließenden Regeneriermittel eine der beim Regenerieren eintretenden Quellung des Ionenaustauschers entsprechende Harzmenge aus der von der aufzubereitenden Flüssigkeit zuletzt und vom Regeneriermittel zuerst durchströmten Kammer in die davor angeordnete Kammer transportiert. Durch diese Maßnahme wird erreicht, daß der in der zuerst vom Regeneriermittel durchströmten Kammer enthaltene Ionenaustauscher während der Regeneration und in der Auswaschphase genügend Raum hat, sein größtes Volumen einzunehmen. Soll eine Rückspülung des Ionenaustauschers in den einzelnen Kammern vorgenommen werden, so wird mit Hilfe der Rückspülflüssigkeit (Wasser) soviel an Ionenaustauscher in die vor- bzw. nachgeschaltete Kammer transportiert, wie zur Schaffung eines Rückspülraumes geeigneter Größe notwendig ist.

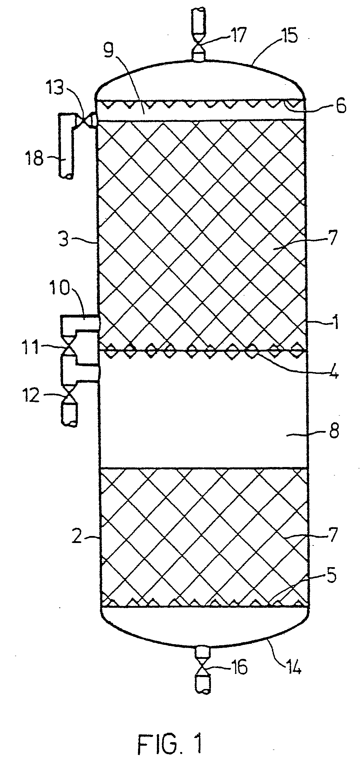

Eine bevorzugte Ausführungsform des erfindungsgemäßen Verfahrens sei anhand von Figur 1 beschrieben:

Das Ionenaustauscher-Filter 1 besteht aus den zwei Kammern 2 und 3, die durch einen für die Flüssigkeit durchlässigen Düsenboden 4 voneinander getrennt sind. Zwei weitere Düsenböden 5 und 6 schließen die untere Kammer 2 nach unten und die obere Kammer 3 nach oben für den Ionenaustauscher ab. Die Abschlüsse der Filtereinheit bilden am unteren Ende der Klöpperboden 14 mit Ventil 16 und am oberen Ende der Klöpperboden 15 mit Ventil 17.

Die beiden Kammern 2 und 3 sind mit Ionenaustauscher 7 einheitlichen Typs gefüllt. Über den lonenaustauscher-Füllungen verbleiben während des Betriebes unterschiedlich große Rückspülräume 8 und 9. Die beiden Kammern 2 und 3 sind durch die Rohrleitung 10 über Ventil 11 miteinander verbunden. Die Rohrleitung 10 ist außerdem mit einem Ventil 12 für den Spülwasseraustritt aus der unteren Kammer 2 ausgestattet. Rohrleitung 18 und Ventil 13 ermöglichen den Spülwasseraustritt aus der oberen Kammer 3.

Zur Beladung wird die aufzubereitende Flüssigkeit über das geöffnete Ventil 16 in die untere, mit lonenaustauscher 7 teilweise gefüllte Kammer 2 eingeleitet. Von dort fließt die Flüssigkeit durch den Düsenboden 4 und die geöffnete, dem Transport des lonenaustauschers 7 dienende Verbindungsleitung 10 und das geöffnete Ventil 11 in die obere Kammer 3, um im aufbereiteten Zustand über den oberen Düsenboden 6 und Ventil 17 das Filter wieder zu verlassen. Dabei wird aus dem in der unteren Kammer 2 befindlichen lonenaustauscher 7 ständig soviel in die obere Kammer 3 transportiert, wie dem Volumenschwund des während des Beladens fortschreitend schrumpfenden lonenaustauschers 7 in der oberen Kammer 3 entspricht. Auf diese Weise wird erreicht, daß die obere Kammer 3 stets weitgehend mit lonenaustauscher 7 gefüllt ist und verhindert, daß es bei diskontinuierlicher Arbeitsweise bei Betriebsunterbrechungen zu unerwünschten Umschichtungen des lonenaustauschers 7 in der oberen Kammer 3 kommt. Bei kontinuierlichem Betrieb kann, wenn die obere Kammer 3 bereits zu Beginn des Filterlaufs zu mindestens 95 Vol.-% mit lonenaustauscher 7 gefüllt ist, Ventil 11 in der Verbindungsleitung 10 geschlossen bleiben, da die in diesem Fall möglichen Umschichtungen nur geringfügig sein können und bei kontinuierlicher Fahrweise Betriebsunterbrechungen nur vor der völligen Regeneration in Frage kommen und bei dieser Regeneration die Folgen einer gegebenenfalls eingetretenen Umschichtung in jedem Fall ausgeglichen werden.

Bei der auf die Beladung folgenden Regeneration wird mit dem von oben nach unten geführten Regeneriermittelstrom soviel der lonenaustauscherfüllung 7 aus der oberen Kammer 3 in die vorgeschaltete Kammer 2 zurückgeführt, wie der Volumenzunahme der lonenaustauscherfüllung bei der Regeneration entspricht, sodaß der in Kammer 3 befindliche lonenaustauscher in der Regenerations- und Auswaschphase ausreichend Platz hat sein größtes Volumen einzunehmen.

Soll die zuerst vom aufzubereitenden Medium durchströmte Füllung der Kammer 2 rückgespült werden, so wird zunächst soviel lonenaustauscher als möglich in die während des Betriebes nachfolgende Kammer 3 über die Leitung 10 und das geöffnete Ventil 11 transportiert. Dazu läßt man das Transportwasser an Ventil 16 ein- und an Ventil 17 austreten. Es folgt die Schließung der Ventile 16, 17 und 11. Ist der rückzuspülende lonenaustauscher 7 aus Kammer 2 in den Bereich unterhalb des Rohres 10 abgesunken, so kann der Rückspülvorgang beginnen. Dazu tritt das Rückspülwasser am Ventil 16 ein und am Ventil 12 aus.

Die Rückspülung des in der zuletzt vom aufzubereitenden Medium durchströmten Kammer 3 befindlichen lonenaustauschers 7 erfolgt in der Weise, daß zunächst soviel lonenaustauscher 7 in die während des Betriebes vorgeschaltete Kammer 2 über die Rohrleitung 10 und das geöffnete Ventil 11 geleitet wird, als zur Schaffung eines Rückspülraumes 9 erforderlicher Größe notwendig ist. Dazu werden die Ventile 17, 11 und 16 geöffnet. Zur eigentlichen Rückspülung werden die Ventile 11 und 17 geschlossen. Die Ventile 16 und 13 bleiben geöffnet. Das Rückspülwasser tritt an Ventil 16 ein und an Ventil 13 aus.

Das erfindungsgemäße Verfahren weist gegenüber dem bekannten Gegenstrom-Verfahren folgende Vorteile auf :

Die Volumenänderungen der lonenaustauscher bei Veränderung der Beladungsform werden innerhalb des Filters ausgeglichen. Es bietet eine verbesserte Betriebssicherheit, eine höhere Leistung zwischen zwei Regenerationen und die Qualität der aufbereiteten Flüssigkeit ist ebenfalls verbessert. Es ermöglicht, jederzeit den Betrieb zu unterbrechen. Die bislang für die Überbrückung solcher Betriebsunterbrechungen erforderlichen zusätzlichen Rohrleitungen, Armaturen, Pumpen usw. entfallen. Es ermöglicht ferner, das Rückspülen der Adsorptionsmittel im Filter selbst vorzunehmen. Dadurch entfällt das Erfordernis eines getrennten Spülbehälters und die mit diesem Erfordernis verbundenen Nachteile.

Beispiel 1

Es wird ein gemäß Fig. 1 gebautes lonenaustauscher-Filter verwendet. Sein lichter Durchmesser beträgt 290 mm und seine zylindrische Mantelhöhe 2 400 mm. Das Filter wird mit insgesamt 103 l eines stark sauren Kationenaustauschers in der Weise gefüllt, daß die obere, bei der Beladung zuletzt von der aufzubereitenden Flüssigkeit durchströmte Kammer eine Harzbetthöhe von 1 080 mm und die ihr vorgeschaltete Kammer einer Harzbetthöhe von 480 mm aufweist.

Die beide Kammern verbindende Rohrleitung 10 hat eine Nennweite von 40 mm (NW 40) und ist 200 mm (gemessen von der Rohrmitte) über und 200 mm (gemessen von der Rohrmitte) unter dem die beiden Kammern trennenden Düsenboden angebracht.

Zum Vergleich der Leistungsfähigkeit des erfindungsgemäßen und bekannten Gegenstrom-Verfahrens wird das vorstehend beschriebene lonenaustauscher-Filter

a) in der erfindungsgemäßen Weise gefahren, d. h. die Schrumpfung des lonenaustauschers in der oberen Kammer wird durch Zufuhr von Kationenaustauscher aus der unteren Kammer (durch das

**0 030 697**

geöffnete Ventil 11) ausgeglichen und auf diese Weise in der oberen Kammer eine gleichmäßige Packungsdichte aufrechterhalten,

b) in der bekannten Weise gefahren, d. h. es wird in der oberen Kammer zu Beginn des Filterlaufs ein Freiraum von 5 % des in der Kammer befindlichen Harzvolumens zwischen Harzfüllung und oberem Düsenboden eingestellt und die Menge des Kationenaustauschers in der Kammer durch Schließung des Ventils 11 unverändert gehalten.

Zur Beladung wird ein Rohwasser mit einem Gesamtsalzgehalt von 12 mval/l Wasser verwendet; das Wasser wird mit einer Geschwindigkeit von 2 100 l/h durch das Filter geleitet. Der Filterlauf wird nach Durchsatz von jeweils 2 m³, d. h. nach Durchlauf von 2, 4, 6, 8 (und 10) m³ für jeweils 15 Minuten unterbrochen und jeweils dann beendet, wenn die Leitfähigkeit im Ablauf des dem Kationenaustauscher nachgeschalteten Filters mit stark basischem Anionenaustauscher in OH-Form auf 10 µS/cm angestiegen ist.

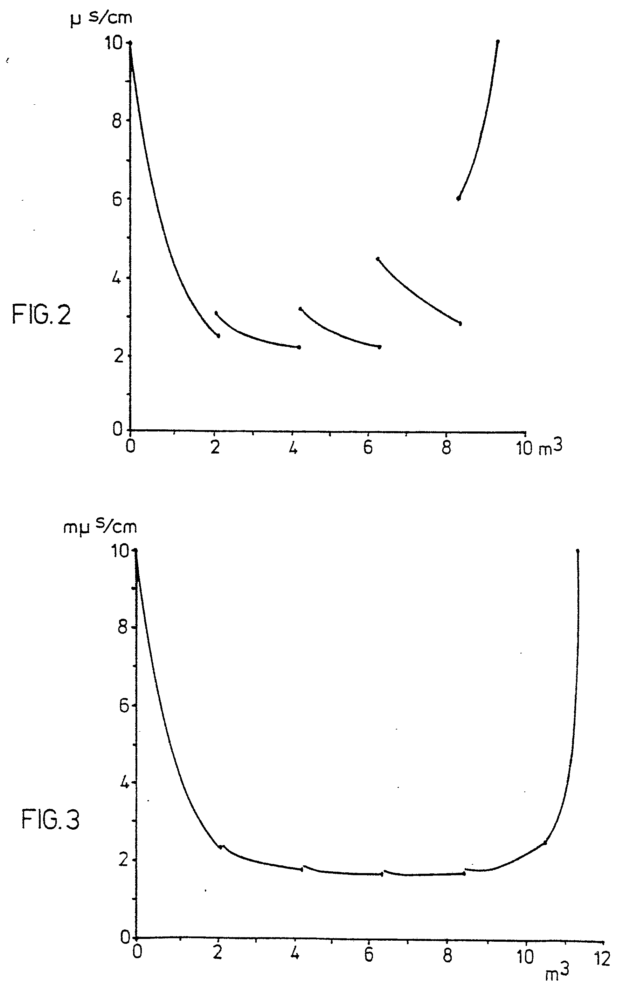

In den Fig. 2 und 3 ist die Leitfähigkeit (in µS/cm) des behandelten Wassers gegen den Durchsatz (in m³) aufgetragen. Wie aus den Fig. 2 und 3 hervorgeht, liefert das erfindungsgemäße Verfahren (Fig. 3) eine sehr gleichmäßige und von den Betriebsunterbrechungen unbeeinflußte Reinwasserqualität. Das bekannte Verfahren (Fig. 2) liefert dagegen eine schwankende und von Unterbrechung zu Unterbrechung sich ständig verschlechtende Reinwasser-Qualität.

Auch in den Durchsatzmengen je Filterlauf und in den erzielten nutzbaren Kapazitäten für den eingesetzten Kationenaustauscher weisen erfindungsgemäßes und bekanntes Verfahren erhebliche Unterschiede auf. Die Durchsatzmengen betragen je Filterlauf

bei dem erfindungsgemäßen Verfahren 11 248 l ;
bei dem bekannten Verfahren        9 356 l.

Die erzielten nutzbaren Kapazitäten betragen

für das erfindungsgemäße Verfahren 1,31 val/l ;
für das bekannte Verfahren        1,09 val/l.

Da der in beiden Verfahren verwendete Ionenaustauscher mit der gleichen Menge Regeneriermittel regeneriert worden ist, folgt für das erfindungsgemäße Verfahren eine deutlich bessere Regeneriermittelausnutzung. Es errechnen sich die folgenden Regeneriermittelüberschüsse :

für das erfindungsgemäße Verfahren 115 % der Theorie ;
für das bekannte Verfahren        139 % der Theorie.

Beispiel 2

Es wird ein gemäß der Fig. 1 gebautes Ionenaustauscherfilter verwendet. Das Filter weist einen lichten Durchmesser von 290 mm und eine zylindrische Mantelhöhe von 2 400 mm auf. Das Filter wird mit insgesamt 105 l eines stark basischen Anionenaustauschers in der Weise gefüllt, daß die obere, bei der Beladung zuletzt von der aufzubereitenden Flüssigkeit durchströmte Kammer eine Harzbetthöhe von 1 100 mm und die ihr vorgeschaltete Kammer eine Harzbetthöhe von 488 mm aufweist. Von dem zur Verfügung stehenden Filtervolumen sind folglich 66,17 Vol.-% durch Ionenaustauscher belegt, der verbleibende Rückspülraum beträgt 33,83 Vol.-%.

Die beide Kammern verbindende Rohrleitung 10 hat eine Nennweite von 40 mm (NW 40) und ist jeweils 100 mm (gemessen von der Rohrmitte) unter und über dem die beiden Kammern trennenden Düsenboden angeschlossen.

Zum Vergleich der Leistungsfähigkeit des erfindungsgemäßen und des bekannten Gegenstromverfahrens wird das vorstehend beschriebene Ionenaustauscherfilter

a) in der erfindungsgemäßen Weise gefahren, d. h. die Schrumpfung des Anionenaustauschers in der oberen Kammer wird durch Zufuhr von Anionenaustauscher aus der unteren Kammer (durch das geöffnete Ventil 11) ausgeglichen und auf diese Weise in der oberen Kammer eine gleichmäßige Packungsdichte aufrechterhalten.

b) In der bekannten Weise gefahren, d. h. es wird in der oberen Kammer zu Beginn des Filterlaufs ein Freiraum von 5 % des in der Kammer befindlichen Harzvolumens zwischen Harzfüllung und oberem Düsenboden eingestellt und die Menge des Ionenaustauschers in der Kammer durch Schließung des Ventils 11 unverändert gehalten.

Zur Beladung wird ein Rohwasser verwendet, das über einem Kationenaustauscher in der H-Form aufbereitet und anschließend durch Einblasen von Luft vom größten Teil der gelösten Kohlensäure befreit worden war. Der Gehalt an Chlorid- und Sulfationen beträgt 5,7 bis 5,8 mval/l, der Gehalt an $SiO_2$ und $CO_2$ 0,3 val/l. Das Wasser wird mit einer Geschwindigkeit von 2 000 l/h durch das Filter geleitet. Der Filterlauf

5

wird nach Durchsatz von jeweils 2 m³, d. h. nach Durchlauf von 2, 4, 6, 8, 10 (und 12) m³ für jeweils 15 Minuten unterbrochen. Der Filterlauf wird beendet, wenn der Kieselsäurewert im behandelten Wasser auf 0,20 mg/l angestiegen ist.

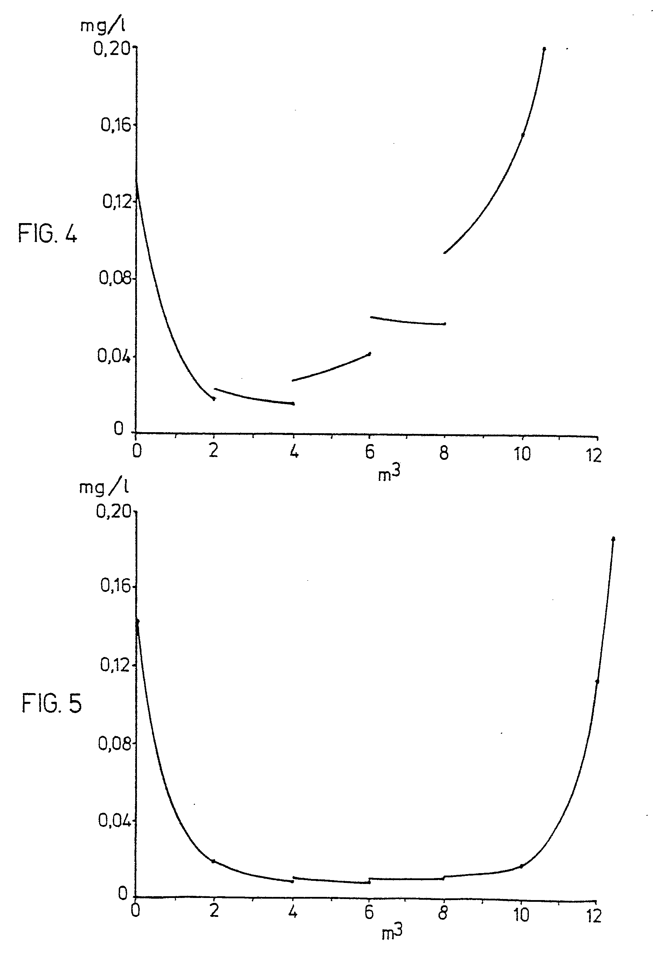

In den Fig. 4 und 5 ist der Kieselsäuregehalt des behandelten Wassers (in mg/l) in Abhängigkeit vom Durchsatz (in m³) aufgetragen. Wie aus den Fig. 4 und 5 hervorgeht liefert das erfindungsgemäße Verfahren (Fig. 5) eine sehr gleichmäßige, von den Betriebsunterbrechungen unabhängige Reinwasserqualität. Das behandelte Wasser zeichnet sich durch niedrige und konstante Restkieselsäurewerte aus. Das bekannte Verfahren (Fig. 4) liefert dagegen nur zu Anfang des Filterlaufes ein Reinwasser mit niedrigen Restkieselsäurewerten. Die mit fortschreitender Beladung des Anionenaustauschers zunehmende Schrumpfung führt von der dritten Unterbrechung an zu Umschichtungen im Feinreinigungsteil. Diese Umschichtungen machen sich in einer deutlichen Qualitätsminderung des Reinwassers bemerkbar. Auch in den Durchsatzmengen je Filterlauf und den erzielten nutzbaren Kapazitäten für den eingesetzten Anionenaustauscher weisen erfindungsgemäßes und bekanntes Verfahren erhebliche Unterschiede auf.

Die Durchsatzmengen betragen je Filterlauf

beim erfindungsgemäßen Verfahren 12 393 l ;
im bekannten Verfahren             10 588 l.

Die erzielten nutzbaren Kapazitäten betragen

für das erfindungsgemäße Verfahren 0,72 val/l ;
für das bekannte Verfahren           0,605 val/l.

Da der in beiden Verfahren verwendete Anionenaustauscher mit der gleichen Menge Regeneriermittel regeneriert worden war, folgt für das erfindungsgemäße Verfahren eine deutlich bessere Regeneriermittelausnutzung. Es errechnen sich die folgenden Regeneriermittelüberschüsse :

für das erfindungsgemäße Verfahren 122 % der Theorie ;
für das bekannte Verfahren          145 % der Theorie.

Im Anschluß an die erfindungsgemäße Beladung des Anionenaustauschers wird zunächst der in der unteren Kammer 2 befindliche Anionenaustauscher rückgespült. Das dazu benötigte Wasser tritt über das Ventil 16 in die untere Kammer 2 und den Anionenaustauscher ein und über die Rohrleitung 10 und Ventil 12 wieder aus. Anschließend wird der in der oberen Kammer 3 befindliche Anionenaustauscher rückgespült. Dazu wird zunächst durch Öffnen der Rohrleitung 10 über Ventil 11 und Einleiten von Wasser durch Ventil 17 die Kammer 3 und durch Öffnen von Ventil 16 solange Anionenaustauscher aus Kammer 3 in Kammer 2 transportiert, bis Kammer 2 gefüllt ist. Dann wird Ventil 11 geschlossen und durch Einleiten von Wasser durch Ventil 16 und Abführen desselben über das geöffnete Ventil 13 der in Kammer 3 befindliche Anionenaustauscher solange rückgespült, bis keine Feinanteile mehr feststellbar sind.

Beispiel 3

Das verwendete Ionenaustauscher-Filter weist einen lichten Durchmesser von 776 mm und eine zylindrische Mantelhöhe von 4 500 mm auf. Es ist durch zwei flüssigkeitsdurchlässige Böden (Düsenböden) in drei übereinander angeordnete gleich große Kammern unterteilt. Die beiden jeweils aneinandergrenzenden Kammern sind durch die Düsenböden überbrückende Rohrleitungen miteinander verbunden. Diese Rohrleitungen haben eine Nennweite von 65 mm (NW 65) und sind jeweils 200 mm (gemessen von der Rohrmitte) unter bzw. über dem zu überbrückenden Düsenboden angebracht. Die Rohrleitungen sind mit einem Absperrventil und einem Ventil für den Spülwasseraustritt versehen. 100 mm unter dem Düsenboden, der die zuoberst angeordnete Kammer nach oben hin abschließt, ist ein mit einem Ventil versehenes Rohr (Nennweite 65 mm) für die Rückspülung des Ionenaustauschers angebracht.

Das Filter wird mit insgesamt 1 500 l eines stark sauren Kationenaustauschers (in der $H^+$-Form) in der Weise gefüllt, daß die Harzbetthöhe der obersten Kammer 1 395 mm, die Harzbetthöhe der mittleren Kammer 888 mm und in der untersten Kammer 888 mm beträgt.

Zum Vergleich der Leistungsfähigkeit des erfindungsgemäßen und bekannten Gegenstrom-Verfahrens wird das vorstehend beschriebene Ionenaustauscher-Filter

a) in der erfindungsgemäßen Weise gefahren, d. h. die Ventile in den die Düsenböden überbrückenden Rohrleitungen von der ersten zur zweiten und von der zweiten zur dritten Kammer bleiben während des gesamten Beladungsvorganges geöffnet. Auf diese Weise wird erreicht, daß die oberste, zuletzt von der aufzubereitenden Flüssigkeit durchflossene Kammer infolge des Überganges des Kationenaustauschers aus den tieferliegenden Kammern in die oberste Kammer gleichmäßig mit Ionenaustauscher gefüllt ist,

**0 030 697**

b) in der bekannten Weise gefahren, d. h. die dritte Kammer wird soweit mit Kationenaustauscher (in der H$^+$-Form) gefüllt, daß noch ein Freiraum zwischen Kationenaustauscherfüllung und oberem Düsenboden von 7 % des in dieser Kammer befindlichen Harzvolumens verbleibt. Während des Beladens werden die Ventile in den die Düsenboden überbrückenden Rohrleitungen geschlossen. Auf diese Weise wird die Ionenaustauschermenge in den einzelnen Kammern während des Filterlaufs konstant gehalten.

Zur Beladung wird ein Rohwasser mit einem Gesamtsalzgehalt von 11,3 mval/l (Ca, Mg 7,5 mval/l ; Na, K 3,8 mval/l) verwendet. Das Wasser wird mit einer Geschwindigkeit von 18 m$^3$/h durch das Filter geleitet. Nach jeweils 2 Stunden wird der Filterlauf für die Dauer von 15 Minuten unterbrochen. Der Filterlauf wird beendet, wenn die Leitfähigkeit im Ablauf des dem Kationenaustauscher nachgeschalteten Filters mit stark basischem Anionenaustauscher auf 10 µS/cm angestiegen ist.

Der Vergleich der bei dem erfindungsgemäßen Verfahren und dem bekannten Filterverfahren erzielten Ergebnisse zeigt, daß das erfindungsgemäße Verfahren ein Reinwasser einer sehr gleichmäßigen Qualität liefert und daß diese Qualität nicht durch die insgesamt 8 Unterbrechungen beeinflußt wird. Das bekannte Verfahren liefert dagegen nur nach den ersten beiden Unterbrechungen ein Reinwasser gleichbleibender Qualität ; nach weiteren Unterbrechungen nimmt die Qualität des Reinwassers merklich ab. Weitere Ergebnisse sind in der nachstehenden Tabelle zusammengefaßt :

| | erfindungsgemäß | gemäß bekanntem Verfahren |
|---|---|---|
| Wasserdurchsatzmenge pro Zyklus (m$^3$) | 177,9 | 148,7 |
| Nutzbare Kapazität : | | |
| a) in val/Zyklus | 2 010,3 | 1 680,3 |
| b) in val/Liter Kationenaustauscher | 1,34 | 1,12 |
| ∅ Reinwasserqualität (µS/cm im Filtrat des nachgeschalteten stark basischen Anionenaustauschers) | 1,84 | 4,77 |

**Ansprüche**

1. Gegenstrom-Verfahren zur Behandlung von Flüssigkeiten mit einem Ionenaustauscher durch Beladen des Ionenaustauschers im Aufwärtsstrom, wobei der untere Teil der Ionenaustauschermasse als Wirbelbett und der obere Teil als Festbett vorliegt, Regenerieren des beladenen Ionenaustauschers im Abwärtsstrom und Rückspülen im Aufwärtsstrom, dadurch gekennzeichnet, daß man einen Ionenaustauscher, dessen Volumen beim Beladen ab- und beim Regenerieren zunimmt, innerhalb des Ionenaustauschfilters auf 2 oder 3 übereinander angeordnete, durch flüssigkeitsdurchlässige Böden getrennte Kammern verteilt, von denen aneinander grenzende Kammern durch den Transport des Ionenaustauschers gestattende, mit einem Absperrorgan versehene Rohrleitungen miteinander verbunden sind, und den Ionenaustauscher während der einzelnen Arbeitsphasen in einer solchen Menge von einer Kammer in die andere Kammer bzw. die anderen Kammern überführt, daß während des Beladens die von der zu behandelnden Flüssigkeit zuletzt durchströmte Kammer zu 80 bis 98 Vol.-%, bezogen auf das Kammervolumen, mit in Festbett vorliegendem Ionenaustauscher gefüllt ist, daß beim Regenieren diese zuletzt durchströmte Kammer gleichmäßig zu 80 bis 100 Vol.-%, bezogen auf das Kammervolumen, mit Ionenaustauscher gefüllt ist und daß beim Rückspülen der Rückspülraum in der rückzuspülenden Kammer 30 bis 100 Vol.-%, bezogen auf das Volumen des in der rückzuspülenden Kammer befindlichen Ionenaustauscher beträgt und daß man zum Transport des Ionenaustauschers von einer Kammer in die andere beim Beladen die zu behandelnde Flüssigkeit, beim Regenerieren das Regeneriermittel und zum Rückspülen die Rückspülflüssigkeit verwendet.

2. Ionenaustauschfilter zur Durchführung des Verfahrens gemäß Anspruch 1, dadurch gekennzeichnet,

a) daß es aus 2 oder 3 übereinander angeordneten, durch flüssigkeitsdurchlässige Böden getrennten Kammern besteht ;

b) daß die aneinandergrenzenden Kammern durch die flüssigkeitsdurchlässigen Böden überbrückende, den Transport des Ionenaustauschers gestattende und mit einem Absperrorgan versehene Rohrleitungen miteinander verbunden sind ;

c) daß die die flüssigkeitsdurchlässigen Böden überbrückenden Rohrleitungen im oberen Viertel der unteren und im unteren Viertel der oberen Kammer angebracht sind ;

**0 030 697**

d) daß bei dem Zweikammerfilter das Verhältnis der Volumina der zwei Kammern 0,5-1,5 : 1 und bei dem Dreikammerfilter das Verhältnis der Volumina der drei Kammern 0,5 bis 1,5 : 0,5 bis 1,5 : 1 beträgt ;
e) daß das Volumen des Ionenaustauschers im Ionenaustauschfilter 55-85 % des Filtervolumens beträgt.

3. Ionenaustauschfilter gemäß Anspruch 2, dadurch gekennzeichnet, daß der freie Querschnitt der Öffnungen der flüssigkeitsdurchlässigen Böden 50 bis 300 cm²/m² Bodenfläche beträgt.

**Claims**

1. Countercurrent process for the treatment of liquids with an ion exchanger by charging the ion exchanger in upward flow, the lower part of the ion exchanger mass being in the form of a fluidised bed and the upper part being in the form of a fixed bed, regenerating the charged ion exchanger in downward flow and backwashing in upward flow, characterised in that an ion exchanger, the volume of which decreases on being charged and increases on being regenerated, is distributed, within the ion exchange filter, between 2 or 3 chambers which are arranged above one another and are separated by trays which are permeable to liquid, of which chambers adjacent chambers are connected to one another by pipelines which permit the transport of the ion exchanger and are provided with a shut-off organ, and during the individual phases of operation the ion exchanger is transferred from one chamber into the other chamber, or the other chambers, in such an amount that during charging that chamber through which the liquid to be treated flows last, is filled, to an extent of 80 to 98 % by volume, relative to the volume of the chamber, with ion exchanger in the form of a fixed bed, that during regeneration this chamber through which the liquid flows last is uniformly filled to the extent of 80 to 100 % by volume, relative to the volume of the chamber, with ion exchanger, and that during backwashing the backwashing space in the chamber to be backwashed is 30 to 100 % by volume, relative to the volume of the ion exchanger present in the chamber to be backwashed and that the liquid to be treated is used for transporting the ion exchanger from one chamber into the other during charging, the regenerating agent is used for this purpose during regeneration and the backwashing liquid during backwashing.

2. Ion exchange filter for carrying out the process according to Claim 1, characterised

a) in that it consists of 2 or 3 chambers which are arranged one on top of the other and are separated by trays which are permeable to liquid ;
b) in that the adjacent chambers are connected to one another by the pipelines which bridge the trays which are permeable to liquid, permit the transport of the ion exchanger and are provided with a shut-off organ ;
c) in that the pipelines bridging the trays which are permeable to liquid are arranged in the upper quarter of the lower chamber and in the lower quarter of the upper chamber ;
d) in that in the case of the two-chamber filter the ratio of the volumes of the two chambers is 0.5-1.5 : 1 and in the case of the three-chamber filter the ratio of the volumes of the three chambers is 0.5 to 1.5 : 0.5 to 1.5 : 1 ;
e) in that the volume of the ion exchanger in the ion exchange filter is 55-85 % of the filter volume.

3. Ion exchange filter according to Claim 2, characterised in that the free cross-section of the openings of the trays which are permeable to liquid is 50 to 300 cm²/m² of tray area.

**Revendications**

1. Procédé en contre-courant pour le traitement de liquides avec un échangeur d'ions par chargement de l'échangeur d'ions en courant ascendant, la partie inférieure de la masse d'échangeur d'ions se présentant à l'état de lit fluide et la partie supérieure à l'état de lit fixe, par régénération de l'échangeur d'ions chargé en courant descendant et par rétrorinçage en courant ascendant, caractérisé en ce qu'on partage un échangeur d'ions, dont le volume lors du chargement diminue et lors de la régénération augmente, à l'intérieur du filtre d'échange d'ions en 2 ou 3 chambres superposées, séparées par des fonds perméables au liquide, parmi lesquelles les chambres mutuellement avoisinantes sont reliées ensemble par des conduites tubulaires qui permettent le transport de l'échangeur d'ions et qui sont pourvues d'un organe d'arrêt, et on transfère l'échangeur d'ions pendant les phases opératoires individuelles en une quantité telle d'une chambre dans l'autre chambre ou les autres chambres que, pendant le chargement, la chambre parcourue en dernier lieu par le liquide à traiter soit remplie à concurrence de 80 à 98 % en volume par rapport au volume de la chambre avec l'échangeur d'ions se présentant en lit fixe, que, pendant la régénération, cette chambre parcourue en dernier lieu soit remplie uniformément à concurrence de 80 à 100 % en volume par rapport au volume de la chambre avec l'échangeur d'ions et que, pendant le rétrorinçage, l'espace de rétrorinçage dans la chambre à rétrorincer s'élève à 30-100 % en volume par rapport au volume de l'échangeur d'ions se trouvant dans la chambre à

8

rétrorincer, et que, pour le transport de l'échangeur d'ions d'une chambre dans l'autre, on utilise lors du chargement le liquide à traiter, lors de la régénération l'agent de régénération et pour le rétrorinçage le liquide de rétrorinçage.

2. Filtre d'échange d'ions pour la mise en œuvre du procédé selon la revendication 1, caractérisé en ce que

a) il consiste en 2 ou 3 chambres superposées, séparées par des fonds perméables au liquide,

b) les chambres avoisinantes sont raccordées entre elles par des conduites tubulaires pontant les fonds perméables au liquide, assurant le transport de l'échangeur d'ions et qui sont pourvues d'un organe d'arrêt,

c) les conduites tubulaires pontant les fonds perméables au liquide sont montées dans le quart supérieur de la chambre inférieure et dans le quart inférieur de la chambre supérieure,

d) dans le filtre à deux chambres le rapport des volumes des deux chambres est de 0,5-1,5 : 1 et dans le filtre à trois chambres le rapport des volumes des trois chambres s'élève à 0,5-1,5 : 0,5-1,5 : 1,

e) le volume de l'échangeur d'ions dans le filtre d'échange d'ions s'élève à 55-85 % du volume du filtre.

3. Filtre d'échange d'ions selon la revendication 2, caractérisé en ce que la section transversale libre des ouvertures des fonds perméables au liquide s'élève à 50-300 cm$^2$/m$^2$ de surface de fond.

FIG. 1

FIG.2

FIG.3

FIG. 4

FIG. 5